**Europäisches Patentamt**

**European Patent Office**

**Office européen des brevets**

(19)

(11) Veröffentlichungsnummer: **0 372 386 B1**

# (12) EUROPÄISCHE PATENTSCHRIFT

(45) Veröffentlichungstag der Patentschrift:
25.09.91 Patentblatt 91/39

(51) Int. Cl.⁵: **B64F 1/315**

(21) Anmeldenummer: 89122076.6

(22) Anmeldetag: 30.11.89

(54) **Treppenfahrzeug, insbesondere fahrbare Flugfeldtreppe.**

(30) Priorität: 10.08.89 DE 8909614 U
02.12.88 DE 8815048 U
02.12.88 DE 8815054 U
02.12.88 DE 8815042 U
10.08.89 DE 8909612 U

(43) Veröffentlichungstag der Anmeldung:
13.06.90 Patentblatt 90/24

(45) Bekanntmachung des Hinweises auf die
Patenterteilung:
25.09.91 Patentblatt 91/39

(84) Benannte Vertragsstaaten:
AT CH DE FR GB IT LI NL

(56) Entgegenhaltungen:
DE-A- 1 965 471
DE-A- 2 046 238

(73) Patentinhaber: FFG
FAHRZEUGWERKSTÄTTEN FALKENRIED
GMBH
Falkenried 7-19
W-2000 Hamburg 20 (DE)

(72) Erfinder: Feutlinske, Hilmar, Ing.(grad.)
Wenzelstrasse 20
W-2000 Hamburg 60 (DE)
Erfinder: Materne, Wolfgang, Dipl.-Ing.
Volksdorfer Weg 25
W-2075 Ammersbek (DE)

(74) Vertreter: Glawe, Delfs, Moll & Partner
Patentanwälte
Liebherrstrasse 20
W-8000 München 26 (DE)

**Beschreibung**

Die Erfindung betrifft ein Treppenfahrzeug, insbesondere eine fahrbare Flugfeldtreppe, mit einem ein geschlossenes Treppengehäuse umfassenden Treppenteil.

Flugfeldtreppen, über die die Fluggäste vom Flugfeld her die Einsteigöffnungen des Flugzeugs erreichen, müssen für moderne Großraumflugzeuge beträchtliche Höhe haben. Nur bei geringer Höhe hat man bislang geschlossene Treppengehäuse zum Schutz der Fluggäste angewendet, weil bei großer Höhe ihr beträchtlicher Seitenwindwiderstand die Standsicherheit gefährdet. So schlägt beispielsweise die DE-A 1965471 vor, die Seitenwände der oben offenen Flugfeldtreppe aus langen, relativ hohen und dünnen Elementen zusammenzusetzen, welche untereinander räumlich getrennt sind, so daß sich dazwischen leere Zonen ergeben, die dem Seitenwind keinen Widerstand entgegensetzen können.

Der Erfindung liegt daher die Aufgabe zugrunde, die Standsicherheit eines mit einem geschlossenen Treppengehäuse versehenen Treppenfahrzeugs, insbesondere einer fahrbaren Flugfeldtreppe für größere Einstiegshöhe, zu verbessern.

Die erfindungsgemäße Lösung besteht im Grundsatz darin, daß die äußere Querschnittsform des Treppengehäuses zumindest in einem oberen Abschnitt des Treppenteils abweichend von der Rechteckform in bezug auf Seitenwind strömungsgünstig gestaltet ist. Einerseits vermindert die strömungsgünstige Gestaltung die Seitenwindkräfte und verbessert dadurch die Standsicherheit des Geräts. Andererseits führt sie zu einer besonderes gut nutzbaren Form des lichten Innenquerschnitts, wodurch die insgesamt erforderliche Querschnittsfläche und damit wiederum der Seitenwindwiderstand vermindert wird. Demgemäß ist die Erfindung dadurch gekennzeichnet, daß die äußeren Seitenwände des Treppengehäuses oben und unten schräg eingezogen sind, wobei sie im Querschnitt mindestens im oberen Drittel ihrer Höhe etwa :

a) symmetrisch viertelkreisförmig oder
b) gemeinsam halbkreisförmig oder
c) gemeinsam halb-querovalförmig oder
d) unter mindestens 30° zur Vertikalrichtung nach oben, innen geneigt sind.

Zweckmäßigerweise erstrecken sich diese für das obere Drittel genannten Merkmale über etwa die obere Hälfte der Seitenwände. Auch der schräg einwärts gerichtete Verlauf im unteren Bereich kann sich etwa über die untere Seitenwandhälfte erstrecken.

Zwar ist aus der DE-A 2046238 ein Fluggast-Überführungsfahrzeug bekannt, das wie ein Omnibus gestaltet ist, dessen Fahrgastzelle an vertikalen, am Fahrgestell befestigten Säulen anhebbar ist, um auf die Höhe der Einsteigöffnung eines Flugzeuges gebracht werden zu können, wobei auch die Stabilität unter Seitenwindeinfluß erwähnt wird und wobei die Querschnittsdarstellung der Fahrgastzelle Seitenwände zeigt, die sowohl in der unteren als auch in der oberen Hälfte schräg einwärts geneigt sind ; jedoch ist diese Neigung so gering, daß sie den Seitenwindwiderstand der Fahrgastzelle nicht spürbar vermindert ; die Schrift enthält auch keine Anhaltspunkte dafür, daß diese Formgebung im Hinblick auf den Seitenwindwiderstand gewählt oder zweckmäßig sei.

Unter dem oberen Abschnitt des Treppenteils ist bei teleskopischer Ausbildung vornehmlich der obere Teleskopabschnitt zu verstehen. Zweckmäßigerweise wird die erfindungsgemäße Querschnittsgestaltung aber auch bei dem unteren Teleskopabschnitt verwendet. Im Bereich einer Übergangsplattform kann im Prinzip dieselbe, wenn auch ggf. breitere Gehäuseform gewählt werden. Jedoch ist es bei der Übergangsplattform in der Regel unschädlich, wenn sie einen größeren Seitenwindwiderstand besitzt, weil sich in ihrem Bereich bereits der Windschutz des Flugzeugrumpfs auswirkt.

Die unteren Seitenwandhälften können im Querschnitt kreisbogen- oder ovalförmige Fortsetzungen der oberen Seitenwandhälften sein. Beispielsweise ist eine Querschnittsgestaltung günstig, bei der die Seitenwände über ihre gesamte Höhe sowie die Überdachung im Querschnitt einen einzigen Kreisbogen oder ein Queroval beschreiben. Jedoch können die unteren Seitenwandhälften im Querschnitt auch geradlinig geführt sein. Der Boden ist zweckmäßigerweise etwa flach. Bei einer weiteren vorteilhaften Ausführungsform sind die oberen und unteren Seitenwandhälften unter mindestens 40° zur Vertikalrichtung nach oben/unten und innen geneigt, so daß die Seitenwände eine spitz dreiecksförmige Gestalt erhalten. Bei einer weiteren Ausführungsform der Erfindung ist das Treppengehäuse in seiner Gesamtheit im Querschnitt etwa dreiecks- oder trapezförmig gestaltet, indem die Seitenwände im mittleren und oberen Drittel nach oben, innen und lediglich im bodennahen Bereich nach unten, innen geneigt sind.

Wenn die Innen-Querschnittsgestalt des Treppengehäuses der erfindungsgemäß äußeren Querschnittsgestalt ähnlich ist, so führt dies dazu, daß der lichte Querschnitt in Hüft- bis Schulterhöhe breiter ist als in Kopfhöhe und am Boden. Dies kommt dem tatsächlichen Raumbedarf entgegen. Die Erfindung beruht somit auch auf der überraschenden Erkenntnis, daß die Verringerung des Seitenwindwiderstands und die optimale Nutzung des lichten Querschnitts sich durch dieselben Mittel erreichen lassen.

Nach einem weiteren Merkmal der Erfindung ist die Bodenstruktur, in die ggf. auch die unteren Teile der Seitenwände einbezogen sein können, tragend ausgebildet, während die oberen Teile der Seitenwände und die Überdachung als nichttragender Leichtbau ausgeführt sind. Beispielsweise können sie von Kunstglasfeldern zwischen Spanten gebildet sein.

Die Erfindung wird im folgenden näher unter Bezugnahme auf die Zeichnung erläutert, die vorteilhafte Ausführungsbeispiele veranschaulicht. Darin zeigen :

| Fig. 1 | eine Seitenansicht des Fahrzeugs mit angehobenem Treppenteil, |
| Fig. 2 | einen Querschnitt längs der Linie II-II der Fig. 1, |
| Fig. 3 | einen Querschnitt längs der III-III der Fig. 1 und |
| Fig. 4 bis 9 | unterschiedliche Querschnittsausbildungen des Treppengehäuses. |

Das Fahrzeug 1 trägt den aus den Teleskopabschnitten 2 und 3 zusammengesetzten Treppenteil, der am oberen Ende eine Übergangsplattform 4 aufweist. Der Treppenteil kann, wie in der Fig. dargestellt, angehoben und teleskopisch ausgestreckt werden, um die Einsteigöffnung 5 eines Flugzeugs 6 zu erreichen. Die Standsicherheit wird in diesem Zustand durch ausfahrbare Stützen 7 gewährleistet. Zum Verfahren des Treppenfahrzeugs wird der Treppenteil 2, 3, 4 teleskopisch zusammengeschoben und auf das Fahrzeug abgesenkt. Eine Gefährdung der Standsicherheit durch Seitenwind kann sich insbesondere im Rangierzustand ergeben, wenn die Stützbeine 7 noch nicht ausgefahren, der Treppenteil 2, 3, 4 aber schon angehoben ist. Erfindungsgemäß werden die Seitenwindkräfte, die die Standsicherheit beeinträchtigen, durch im Querschnitt strömungsgünstige Gestaltung zumindest des oberen Treppenteils 3 vermindert.

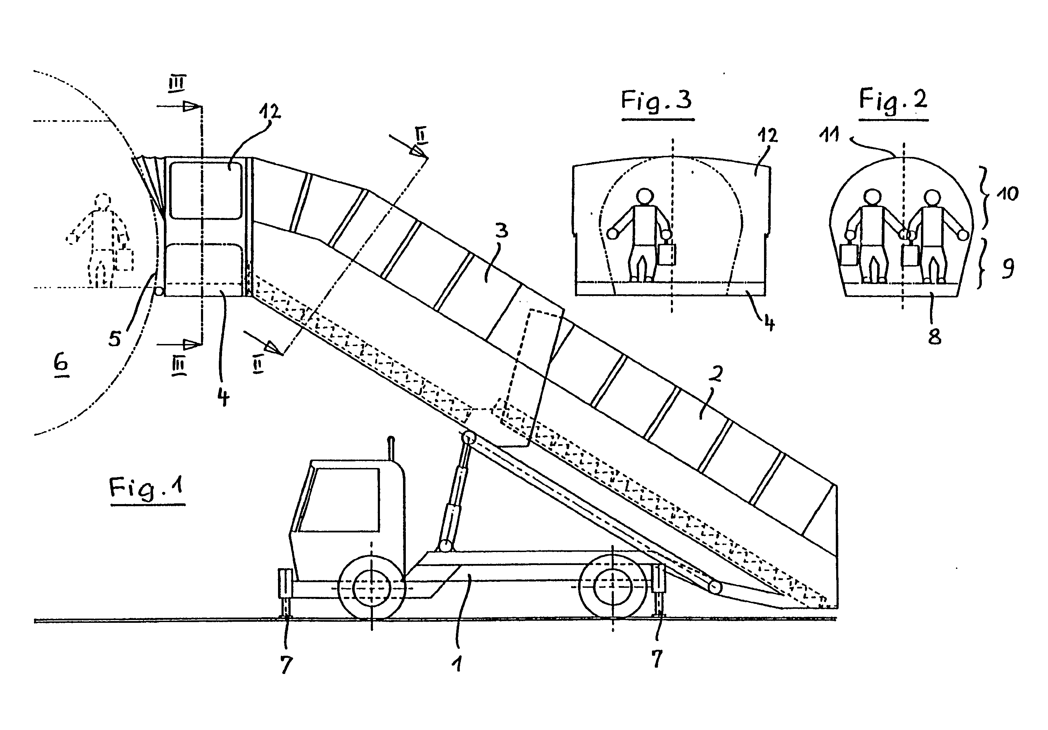

Gemäß Fig. 2, die ein erstes Ausführungsbeispiel zeigt, ist die obere Gehäusehälfte halbkreisförmig gestaltet. Der Querschnitt zumindest des oberen Treppenabschnitts 3 wird von der Bodenstruktur 8, den unteren Seitenwandteilen 9, den oberen Seitenwandteilen 10 und dem Überdachungsbereich 11 gebildet. Die Bodenstruktur 8, ggf. zusammen mit den unteren Seitenwandteilen 9, ist tragend ausgebildet. Die Seitenwände (zumindest deren oberer Teil 10) und der Überdachungsbereich 11 sind als Leichtbau gestaltet. Dies gilt zweckmäßigerweise auch für den unteren Treppenabschnitt 2, während das Gehäuse 12 der Übergangsplattform 4 im Hinblick auf übergeordnete Konstruktionsgesichtspunkte im Querschnitt anders gestaltet sein mag (Fig. 3). Die erfindungsgemäße äußere Querschnittsgestalt führt auch zu einem günstigen Profil des lichten Querschnitts, weil die den Durchgang benutzenden Personen im Hüft- bis Schulterbereich, wie in Fig. 2 erkennbar, einen größeren Breitenbedarf haben als im im Kopf- und Fußbereich.

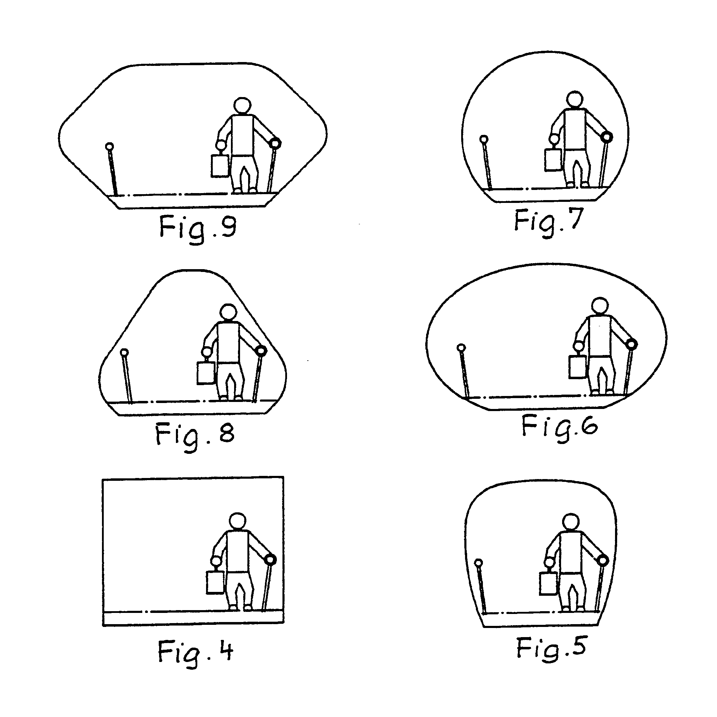

Die Figuren 4 bis 9 stellen der herkömmlichen, rechteckigen Querschnittsgestalt, die in Fig. 4 dargestellt ist, einige Varianten erfindungsgemäßer Querschnittsgestaltung gegenüber. Im Beispiel gemäß Fig. 5 ist die untere Seitenwandhälfte etwas stärker und gerundet eingezogen als im Beispiel gemäß Fig. 2, während die Viertelkreisrundung, durch die die oberen Seitenwandbereiche geprägt sind, auf etwa das obere Drittel der Seitenwandhöhe beschränkt sind. Diese Viertelkreise sind durch eine schwach gebogene Dachkontur etwa querovalförmig miteinander verbunden.

Im Ausführungsbeispiel gemäß Fig. 6 und 7 ist die Querschnittsausbildung in ihrer Gesamtheit durch Kreisform bzw. Querovalform geprägt. Lediglich der Bodenbereich ist abgeflacht. Zwar könnte er auch kreisbogenförmig bzw. querovalförmig verkleidet sein ; da dadurch aber die Gesamthöhe des Gehäuses wächst, ist dies im allgemeinen nicht empfehlenswert, zumal es mit konstruktiven Problemen im Hinblick auf die Abstützung des Treppengehäuses vom Fahrgestell her verbunden sein kann.

Die Fig. 8 und 9 veranschaulichen Ausführungsbeispiele, bei denen die Schrägung der Seitenwände zu einem beträchtlichen Teil geradlinig ausgeführt ist, wenngleich sämtliche Übergänge und Kanten kräftig gerundet sind. Daraus ergibt sich im Beispiel gemäß Fig. 8 eine im wesentlichen dreiecksförmige oder trapezförmige Querschnittsgestalt des Treppengehäuses, wobei die nach oben, innen gerichtete Schrägung der Seitenwand tief hinabgeführt ist bis in den Hüft- oder Kniebereich der Benutzer, so daß die nach unten, innen verlaufende Schrägung auf denjenigen Bereich der Seitenwände beschränkt ist, der im unmittelbaren Grenzbereich zur Bodenstruktur liegt. Der Neigungswinkel gegenüber der Vertikalrichtung ist größer als etwa 30°.

Im Unterschied dazu ist die Form gemäß Fig. 9 durch eine dreiecksförmige oder winklige Gestalt jeder der beiden Seitenwände geprägt, wobei der Übergang zwischen den beiden Schrägungsbereichen etwa in mittlerer Höhe liegt. Der Schrägungswinkel gegenüber der Vertikalrichtung liegt bei etwa 45°.

Das günstigere Seitenwindverhalten der erfindungsgemäßen Querschnittsgestaltung schlägt sich in den $C_w$-Werten nieder. Während dieser für die rechteckige Ausbildung gemäß Fig. 4 etwa 1,3 beträgt, kann er durch die Formgebung gemäß Fig. 2 oder 5 auf unter 1 gesenkt werden. Am günstigsten liegen die Querschnittsformen gemäß Fig. 6 und 7 mit einem $C_w$-Wert von weniger als 0,9. Nur wenig ungünstiger sind die Querschnitt-

EP 0 372 386 B1

sformen gemäß Fig. 8 und 9.

Mit anderen Worten ist es möglich, durch die erfindungsgemäße Querschnittsgestaltung die Seitenkräfte um ein Drittel zu senken. Für vielen Anwendungsfälle ist dies überhaupt erst der Schlüssel zur Verwendbarkeit geschlossener Treppengehäuse.

## Patentansprüche

1. Treppenfahrzeug, insbesondere fahrbare Flugfeldtreppe, mit einem ein geschlossenes Treppengehäuse umfassenden Treppenteil, dadurch gekennzeichnet, daß die äußeren Seitenwände des Treppengehäuses oben und unten schräg eingezogen sind, wobei sie im Querschnitt mindestens im oberen Drittel ihrer Höhe etwa

a)  viertelkreisförmig oder
b)  gemeinsam halbkreisförmig oder
c)  gemeinsam halb-querovalförmig oder
d)  unter mindestens 30° zur Vertikalrichtung nach oben, innen geneigt sind.

2. Treppenfahrzeug nach Anspruch 1, dadurch gekennzeichnet, daß die angegebene Querschnittsform sich über die obere Seitenwandhälfte erstreckt.

3. Treppenfahrzeug nach Anspruch 1 oder 2, dadurch gekennzeichnet, daß die unteren Seitenwandhälften nach unten schräg einwärts verlaufen.

4. Treppenfahrzeug nach Anspruch 1 oder 3, dadurch gekennzeichnet, daß die unteren Seitenwandteile im Querschitt kreisbogen- oder ovalförmige Fortsetzungen der oberen Seitenwandteile sind.

5. Treppenfahrzeug nach einem der Ansprüche 1 bis 4, dadurch gekennzeichnet, daß der Boden (8) im Querschnitt etwa flach ist.

6. Treppenfahrzeug nach Anspruch 5, dadurch gekennzeichnet, daß die Seitenwände über ihre gesamte Höhe im Querschnitt kreis- oder querovalförmig sind.

7. Treppenfahrzeug nach einem der Ansprüche 1, 3 oder 5, dadurch gekennzeichnet, daß die oberen und unteren Seitenwandhälften unter mindestens 40° zur Vertikalrichtung nach oben/unten und innen geneigt verlaufen.

8. Treppenfahrzeug nach Anspruch 1, dadurch gekennzeichnet, daß die Seitenwände gemeinsam im Querschnitt etwa dreiecks- oder trapezförmig gestaltet sind, indem sie im mittleren und oberen Drittel nach oben und innen und lediglich im bodennahen Bereich nach unten und innen geneigt sind.

9. Treppenfahrzeug nach einem der Ansprüche 1 bis 8, dadurch gekennzeichnet, daß der lichte Gehäusequerschnitt in Hüft - bis Schulterhöhe breiter ist als in Kopfhöhe und/oder am Boden.

10. Treppenfahrzeug nach einem der Ansprüche 1 bis 9, dadurch gekennzeichnet, daß die Bodenstruktur (8) tragend und die obere Gehäusestruktur (10, 11) als nichttragender Leichtbau ausgeführt ist.

11. Treppenfahrzeug nach Anspruch 10, dadurch gekennzeichnet, daß die unteren Teile (9) der Seitenwände in die tragende Struktur einbezogen sind.

## Claims

1. A stairway vehicle, in particular a mobile airport stairway, having a stairway part comprising a closed stairway housing, characterised in that the outer side walls of the stairway housing are drawn in obliquely at the top and at the bottom, wherein in cross-section at least in the upper third of their height they are approximately

a)  quadrant-shaped or
b)  jointly semicircular or
c)  jointly semi-transversely oval-shaped
d)  upwardly and inwardly inclined at at least 30° to the vertical.

2. A stairway vehicle according to Claim 1, characterised in that the indicated cross-sectional shape extends over the upper side wall half.

3. A stairway vehicle according to Claim 1 or 2, characterised in that the lower side wall halves are inclined downwardly and inwardly.

4

4. A stairway vehicle according to Claim 1 or 3, characterised in that, in cross-section, the lower side wall parts are circular or oval-shaped continuations of the upper side wall parts.

5. A stairway vehicle according to any one of Claims 1 to 4, characterised in that the floor (8) is substantially flat in cross-section.

6. A stairway vehicle according to Claim 5, characterised in that the side walls are circular or transversely oval-shaped in cross-section over their entire height.

7. A stairway vehicle according to any one of Claims 1, 3 or 5, characterised in that the upper and lower side wall halves extend upwardly/downwardly and are inwardly inclined at at least 40° to the vertical.

8. A stairway vehicle according to Claim 1, characterised in that the side walls are jointly approximately triangular or trapezium-shaped in cross-section by being upwardly and inwardly inclined in the central and upper third and downwardly and inwardly inclined only in the zone near the floor.

9. A stairway vehicle according to any one of Claims 1 to 8, characterised in that the unobstructed housing cross-section is wider at hip to shoulder level than at head level and/or at the floor.

10. A stairway vehicle according to any one of Claims 1 to 9, characterised in that the floor structure (8) is load-bearing and the upper housing structure (10, 11) is of non-supporting light-weight construction.

11. A stairway vehicle according to Claim 10, characterised in that the lower parts (9) of the side walls are integrated into the load-bearing structure.


**Revendications**

1. Véhicule-escalier, en particulier escalier mobile d'aéroport, comportant une partie escalier qui comprend une cage fermée d'escalier, caractérisé en ce que les parois latérales extérieure de la cage d'escalier se resserrent obliquement en haut et en bas, ayant à peu près, en coupe transversale, au moins dans le tiers supérieur de leur hauteur,

a) la forme d'un quart de cercle ou
b) la forme en commun d'un demi-cercle ou
c) la forme en commun d'un demi-ovale aplati ou
d) une inclinaison vers le haut et vers l'intérieur d'au moins 30° par rapport à la direction verticale.

2. Véhicule-escalier selon la revendication 1, caractérisé en ce que la forme en coupe transversale indiquée s'étend sur la moitié supérieure des parois latérales.

3. Véhicule-escalier selon la revendication 1 ou 2, caractérisé en ce que les moitiés inférieures des parois latérales s'étendent obliquement vers le bas et vers l'intérieur.

4. Véhicule-escalier selon la revendication 1 ou 3, caractérisé en ce qu'en coupe transversale, les parties inférieures des parois latérales sont des prolongements en arc de cercle ou en ovale des parties supérieures des parois latérales.

5. Véhicule-escalier selon l'une quelconque des revendications 1 à 4, caractérisé en ce que le plancher (8) est à peu près plan en coupe transversale.

6. Véhicule-escalier selon la revendication 5, caractérisé en ce qu'en coupe transversale, les parois latérales ont la forme d'un cercle ou d'un ovale aplati sur toute leur hauteur.

7. Véhicule-escalier selon l'une quelconque des revendications 1, 3 ou 5, caractérisé en ce que les moitiés supérieures et inférieures des parois latérales s'étendent avec une inclinaison vers l'intérieur et vers le haut/bas d'au moins 40° par rapport à la direction verticale.

8. Véhicule-escalier selon la revendication 1, caractérisé en ce qu'en coupe transversale, les parois latérales ont à peu près la forme en commun d'un triangle ou d'un trapèze, par le fait que, dans leurs tiers moyen et supérieur, elles sont inclinées vers le haut et vers l'intérieur et qu'elles ne sont inclinées vers le bas et vers l'intérieur que dans la région voisine du plancher.

9. Véhicule-escalier selon l'une quelconque des revendications 1 à 8, caractérisé en ce que la largeur intérieure de la cage est plus large entre la hauteur de hanche et la hauteur d'épaule qu'à la hauteur de la tête et/ou qu'au niveau du plancher.

10. Véhicule-escalier selon l'une quelconque des revendications 1 à 9, caractérisé en ce que la structure de plancher (8) est portante et la structure supérieure de la cage (10, 11) est réalisée en construction légère non portante,

11. Véhicule-escalier selon la revendication 10, caractérisé en ce que les parties inférieures (9) des parois latérales sont intégrées dans la structure portante.

Fig.3

Fig.2

Fig.1

EP 0 372 386 B1

Fig.9

Fig.7

Fig.8

Fig.6

Fig.4

Fig.5